(19) Europäisches Patentamt / European Patent Office / Office européen des brevets

(11) **EP 2 800 173 A1**

(12) **EUROPEAN PATENT APPLICATION**
published in accordance with Art. 153(4) EPC

(43) Date of publication:
**05.11.2014 Bulletin 2014/45**

(51) Int Cl.:
***H01M 4/139*** *(2010.01)*

(21) Application number: **11878621.9**

(22) Date of filing: **27.12.2011**

(86) International application number:
**PCT/JP2011/080317**

(87) International publication number:
**WO 2013/098970 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Kabushiki Kaisha Toshiba**
**Minato-ku**
**Tokyo 105-8001 (JP)**

(72) Inventors:
• **MORISHIMA, Hideaki**
**Tokyo 105-8001 (JP)**

• **UEMATSU, Ikuo**
**Tokyo 105-8001 (JP)**
• **NAKAHATA, Masaomi**
**Tokyo 105-8001 (JP)**
• **TOYOSHIMA, Takeshi**
**Tokyo 105-8001 (JP)**

(74) Representative: **Hoffmann Eitle**
**Patent- und Rechtsanwälte PartmbB**
**Arabellastraße 30**
**81925 München (DE)**

(54) **METHOD FOR PRODUCING ELECTRODE AND METHOD FOR PRODUCING NON-AQUEOUS ELECTROLYTE BATTERY**

(57) According to one embodiment, a manufacturing method of an electrode, includes coating a first surface of a current collector with slurry, coating a second surface of the current collector with the slurry, and drying. The first surface of the current collector is coated with slurry containing active material in such a way that a slurry coated portion and a slurry non-coated portion are alternately arranged in a direction perpendicular to a moving direction of the current collector. The second surface of the current collector is coated with slurry containing active material in such a way that the slurry coated portion and the slurry non-coated portion are alternately arranged in the direction perpendicular to the moving direction of the current collector. Next, the current collector is carried to a backup roll including a plurality of annular protruding portions formed on an outer circumferential surface thereof, by a second support roll. The slurry non-coated portion of the current collector is arranged on the annular protruding portions. The slurry coated portion of the first surface and the second surface of the current collector is dried by the drying apparatus. A formula (1) and a formula (2) shown below are satisfied:

$$0 < L_1 \quad (1)$$

$$0 < L_2 \quad (2).$$

EP 2 800 173 A1

F I G. 1

**Description**

Technical Field

Embodiments described herein generally relate to a manufacturing method of an electrode and a manufacturing method of a non-aqueous electrolyte battery.

Background Art

In recent years, non-aqueous electrolyte batteries attract widespread attention as power sources for hybrid electric vehicles or accumulating electricity devices for generators using natural energy such as sunlight and wind energy. Non-aqueous electrolyte batteries for such uses need a larger capacity when compared with non-aqueous electrolyte batteries mainly used for electric devices such as mobile phones and note PCs and thus, electrodes, which are storage elements inside a battery, are desirably longer.

Various ways of efficiently manufacturing long electrodes have been devised. An electrode of non-aqueous electrolyte batteries generally has a layer containing active material on both sides of a current collector. A layer containing active material is formed, for example, as follows. First, an electrode material containing active material is dispersed in an organic solvent or water to prepare a coating liquid. After the current collector being coated with the obtained coating liquid, the coating liquid is dried by evaporating the organic solvent or water in a drying furnace. A layer containing active material is first formed on one side of the current collector by using a set of the coating and drying processes described above and then a layer containing active material is formed on the other side thereof by the same coating and drying processes.

To form such a layer containing active material on both front and rear sides, the same coating/drying apparatus may be used twice to achieve the formation thereof. However, the work cannot be said to be efficient because it is necessary to repeat a series of operations twice in which a current collector is coated with slurry while the current collector wound in a loop shape being unwound and then the slurry is dried and subsequently the current collector coated with the slurry is wound and removed from the apparatus to produce one electrode.

As a method of solving the above problem, an apparatus obtained by arranging two units of the same coating/drying apparatus in series was present in which one side is coated and dried by the first unit of the apparatus and subsequently the other side is coated and dried by the second unit of the apparatus. Thanks to this apparatus, the work of winding, removal, and remounting on the unwinding side after the first round of coating and drying can be omitted, enabling improvement of work efficiency accordingly.

In such a case, however, two units of the apparatus whose total length is 50 m to 100 m are needed for coating and drying to produce one electrode and production efficiency per unit installation space of the manufacturing apparatus declines. Further, in terms of cycle life characteristics and safety, it is necessary to reduce moisture mixing and mixing of metallic foreign material as much as possible for non-aqueous electrolyte batteries and the manufacturing space needs to be generally a dry room of low dew point while keeping a clean environment. Therefore, an increase of the installation space of production equipment has a drawback of also increasing costs to maintain the environment of huge space.

Thus, a method of coating both sides of a current collector with slurry and then drying the slurry in a drying furnace at a time is devised as a further developed method. According to this method, the front and rear sides are coated prior to a drying apparatus and then the front and rear sides can simultaneously be dried by one drying apparatus and thus, an increase of the installation space of the apparatus can be suppressed while more efficient work being achieved.

However, the method of coating the front and rear sides of the current collector with slurry and then simultaneously drying both sides poses a problem below. Namely, if the front and rear sides of a current collector are coated, the coated surface cannot be directly supported before being dried.

Thin metal foil whose thickness is about 10 to 30 $\mu$m of, for example, aluminum or copper is used as a current collector of non-aqueous electrolyte batteries. If the foil is not supported from the underside in a movement from the coating process to the drying process, oblique wrinkles caused by a tension needed for moving applied in the feed direction arise. If the oblique wrinkles arise in the current collector, the amount of coating varies on the oblique wrinkles of the current collector when the current collector is coated with a coating liquid.

If an electrode with an uneven amount of coating is used for rapid charge/discharge, a difference of current density arises between a portion of a large amount of coating and a portion of a small amount of coating, creating a portion of relatively early degradation. Then, if a portion of an electrode is too degraded to sufficiently perform the function thereof, the current is concentrated in the remaining portion and degradation thereof is also rapidened. If such a vicious circle arises, a problem of rapidened overall degradation compared with an electrode with a relatively uniform amount of coating is caused.

Citation List

Patent Literature

Patent Literature 1: Jpn. Pat. Appln. KOKAI Publication No. 2002-313327
Patent Literature 2: Jpn. Pat. Appln. KOKAI Publication No. 4-061959
Patent Literature 3: Jpn. Pat. Appln. KOKAI Publication No. 2007-029789
Patent Literature 4: Jpn. Pat. Appln. KOKAI Publication No. 2002-361152

Summary of Invention

Technical Problem

The subject to be settled by the present invention is to provide a manufacturing method of an electrode in which uniformity in the amount of coated slurry on a current collector is improved and work efficiency is superior and a manufacturing method of a non-aqueous electrolyte battery.

Solution to Problem

According to one embodiment, a manufacturing method of an electrode, includes coating a first surface of a current collector with slurry, coating a second surface of the current collector with the slurry, and drying. The first surface of the current collector is coated with slurry containing active material in such a way that a slurry coated portion and a slurry non-coated portion are alternately arranged in a direction perpendicular to a moving direction of the current collector. The second surface of the current collector is coated with slurry containing active material in such a way that the slurry coated portion and the slurry non-coated portion are alternately arranged in the direction perpendicular to the moving direction of the current collector. Next, the current collector is carried to a backup roll including a plurality of annular protruding portions formed on an outer circumferential surface thereof, by a second support roll. The slurry non-coated portion of the current collector is arranged on the annular protruding portions. The slurry coated portion of the first surface and the second surface of the current collector is dried by the drying apparatus. A formula (1) and a formula (2) shown below are satisfied:

$$0 < L_1 \qquad (1)$$

$$0 < L_2 \qquad (2)$$

where $L_1$ is a distance between a first position where the first surface of the current collector and the first support roll are in contact and a second position where the first surface of the current collector and the slurry supplied from the first die head are in contact and $L_2$ is the distance between a third position where the second surface of the current collector and the slurry supplied from the second die head are in contact and a fourth position where the slurry non-coated portion of the first surface or the second surface of the current collector and the second support roll are in contact.

Also according to an embodiment, a manufacturing method of a non-aqueous electrolyte battery including a positive electrode, a negative electrode, and a non-aqueous electrolyte is provided. At least one electrode of the positive electrode and the negative electrode is manufactured by the method according to the embodiment.

Brief Description of Drawings

FIG. 1 is a schematic diagram of a coating apparatus and a drying apparatus used by a method according to an embodiment;
FIG. 2 is a perspective view exemplifying a second support roll of the coating apparatus shown in FIG. 1;
FIG. 3 is a plan view when the second support roll shown in FIG. 2 is viewed from an end side thereof;
FIG. 4 is a perspective view showing a current collector carried to the second support roll shown in FIG. 1;

FIG. 5 is a schematic diagram showing the drying apparatus shown in FIG. 1;

FIG. 6 is a perspective view showing the current collector coated with slurry on one side thereof;

FIG. 7 is a perspective view showing the current collector coated with slurry on both sides thereof;

FIG. 8 is a perspective view showing an electrode manufactured by the method according to the embodiment;

FIG. 9 is a diagram showing arrangement examples of first and second support rolls and first and second die heads in the coating apparatus used in an embodiment;

FIG. 10 is an enlarged view of the first support roll and the first die head shown in (a) of FIG. 9;

FIG. 11 is an enlarged view of the second support roll and the second die head shown in (b) of FIG. 9;

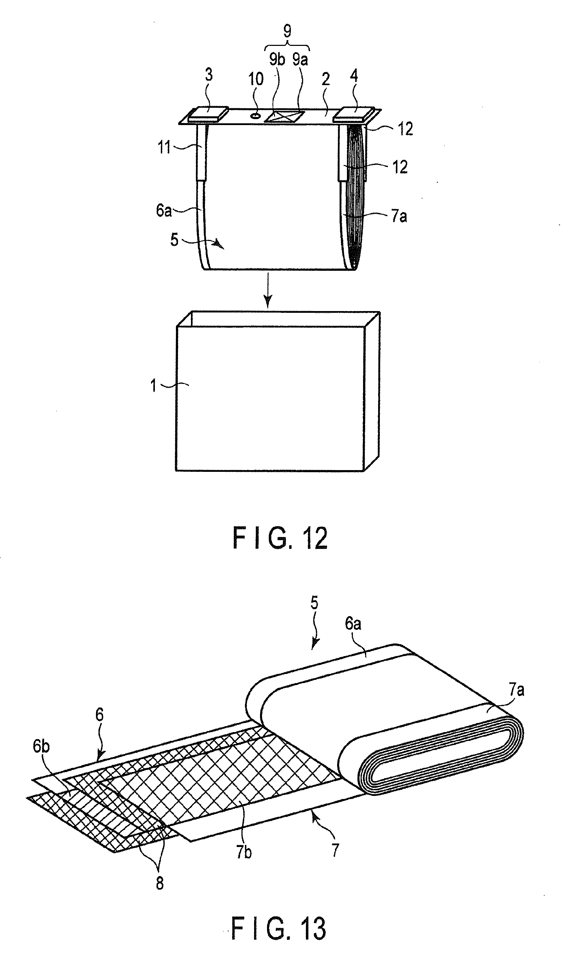

FIG. 12 is a perspective exploded view of a battery manufactured by the method according to the embodiment;

FIG. 13 is a perspective partial exploded view of an electrode group used in the battery shown in FIG. 12;

FIG. 14 is a diagram showing the distribution of an amount of coating of the electrode manufactured by a method according to Example 1;

FIG. 15 is a diagram showing the distribution of the amount of coating of the electrode manufactured by a method according to Comparative Example; and

FIG. 16 is a schematic diagram of a coating apparatus and a drying apparatus used by the method according to Comparative Example.

Description of Embodiments

Embodiments will be described below with reference to drawings.

(First embodiment)

The inventors acquired the following findings as a result of studiously having continued research on how to suppress an occurrence of oblique wrinkles of a current collector in a manufacturing method of coating both sides of the current collector with slurry before entering a drying process.

That is, when carrying thin metal foil of, for example, aluminum or copper, the metal foil forms a plane if a tension is applied in a carrying direction, that is, the length direction, but the metal foil in a plane shape cannot support a compressive stress from a width direction thereof and oblique wrinkles are caused even by an extremely small width-direction compressive stress arising for some reason in a carrying apparatus. On the other hand, if the carrying path is designed to cause the metal foil to meander when viewed from a transverse section instead of the plane, the metal foil becomes markedly more resistant to the compressive stress from the lateral direction. This can be verified from the fact that while the center of thin metal foil rises when, for example, a force is applied to an end face of the metal foil in a plane shape even if the force is extremely small, metal foil wound in a cylindrical shape is deformed but does not buckle when a force is applied in parallel with a cylindrical axis.

This suggests setting a carrying path of a current collector in such a way that the current collector forms a portion of a circle instead of a plane shape in the instant of coating the current collector with slurry. The inventors found that uniformity in coating can be improved by improving the shape of a second support roll and the arrangement of first and second support rolls and first and second die heads.

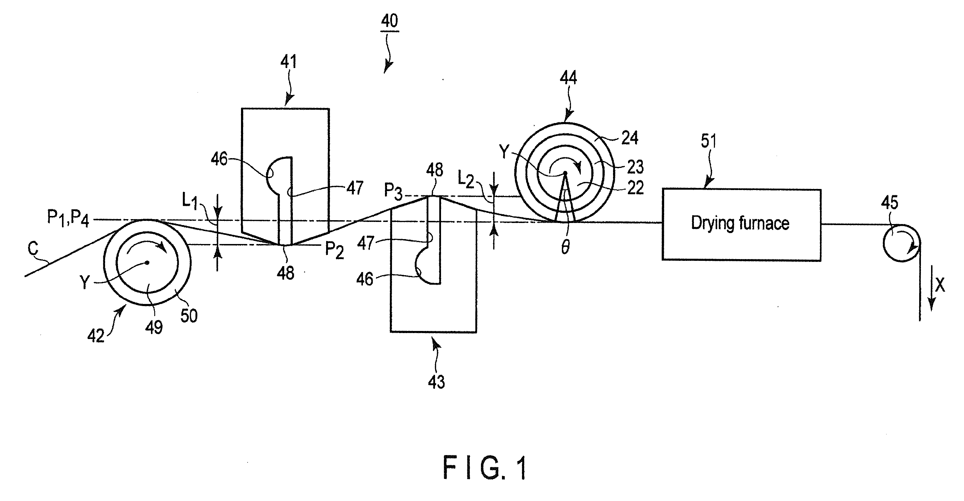

The manufacturing method of an electrode according to the first embodiment will be described with reference to FIGS. 1 to 8. As shown in FIG. 1, a coating apparatus 40 includes a first die head 41, a first support roll 42, a second die head 43, and a second support roll 44. A carrying roller 45 is arranged subsequent to the second support roll 44. A current collector C in a long shape is carried so as to pass by the first support roll 42, then the first die head 41, then the second die head 43, and then the second support roll 44. The first die head 41 is arranged in one space and faces a first surface of the current collector C. The second die head 43 is arranged in the other space and faces a second surface of the current collector C. Thus, the first surface is coated with slurry as the current collector C passes by the first die head 41 and the second surface is coated with slurry as the current collector C passes by the second die head 43.

Each of the first and second die heads 41, 43 includes a liquid storage portion 46 that receives the supply of slurry from a slurry supply apparatus (not shown), a die slit 47 connected to and communicating with the liquid storage portion 46, and a plurality of slurry discharge ports 48 provided at the tip of the die slit 47. The number of the slurry discharge ports 48 can be changed in accordance with the row number of slurry with which the current collector C is coated and thus can be set to 1 or a plural number. In FIG. 1, the number of the slurry discharge ports 48 is a plural number. There is a gap between the slurry discharge ports 48 of the first and second die heads 41, 43 and the current collector C and the surface of the current collector C can be coated with slurry by supplying the slurry to the gap. A second position where slurry supplied from the slurry discharge ports 48 of the first die head 41 and the first surface of the current collector C come into contact is set as $P_2$ and a third position where slurry supplied from the slurry discharge ports 48 of the second die head 43 and the second surface of the current collector C come into contact is set as $P_3$.

The first support roll 42 is arranged prior to the first die head 41 and positioned on the opposite side of the first die head 41. The current collector C is arranged between the first die head 41 and the first support roll 42. The first support roll 42 includes a cored bar 49 and a surface layer 50 covering the cored bar 49. No protruding portion is provided on the outer circumference of the surface layer 50. A distance $L_1$ between a first position $P_1$ where the first support roll 42 and the first surface of the current collector C are in contact and the second position $P_2$ has a value greater than 0. In other words, the first position $P_1$ and the second position $P_2$ are not in the same plane.

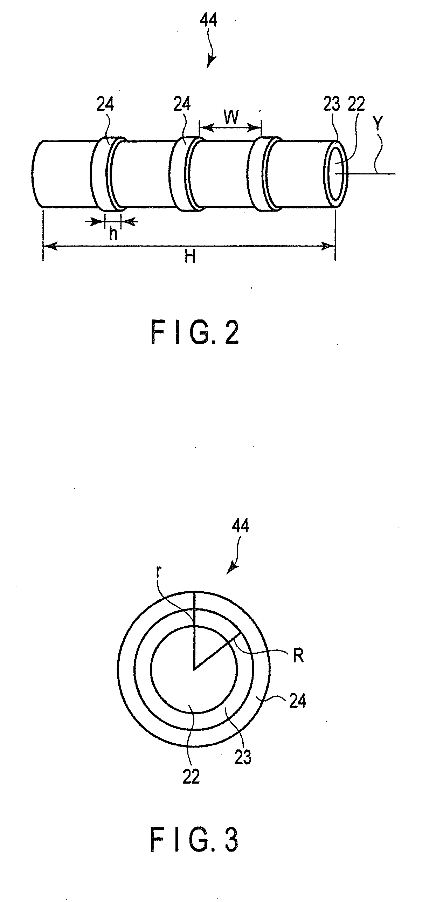

The second support roll 44 is arranged subsequent to the second die head 43 and positioned on the opposite side of the second die head 43. The current collector C is arranged between the second die head 43 and the second support roll 44. A rotation axis Y of the second support roll 44 is arranged in parallel with a rotation axis Y of the first support roll 42. As shown in FIG. 2, the second support roll 44 includes a cored bar 22, a surface layer 23 formed on the cored bar 22, and a plurality of protruding portions 24 formed on the outer circumferential surface of the surface layer 23. Each of the protruding portions 24 has an annular shape and covers the outer circumferential surface of the surface layer 23. An interval W is provided between the adjacent protruding portions 24. The interval W is changed in accordance with the width of slurry with which the current collector is coated. A distance $L_2$ between a fourth position $P_4$ where the second support roll 44 and the second surface of the current collector C are in contact and the third position $P_3$ has a value greater than 0. In other words, the fourth position $P_4$ and the third position $P_3$ are not in the same plane.

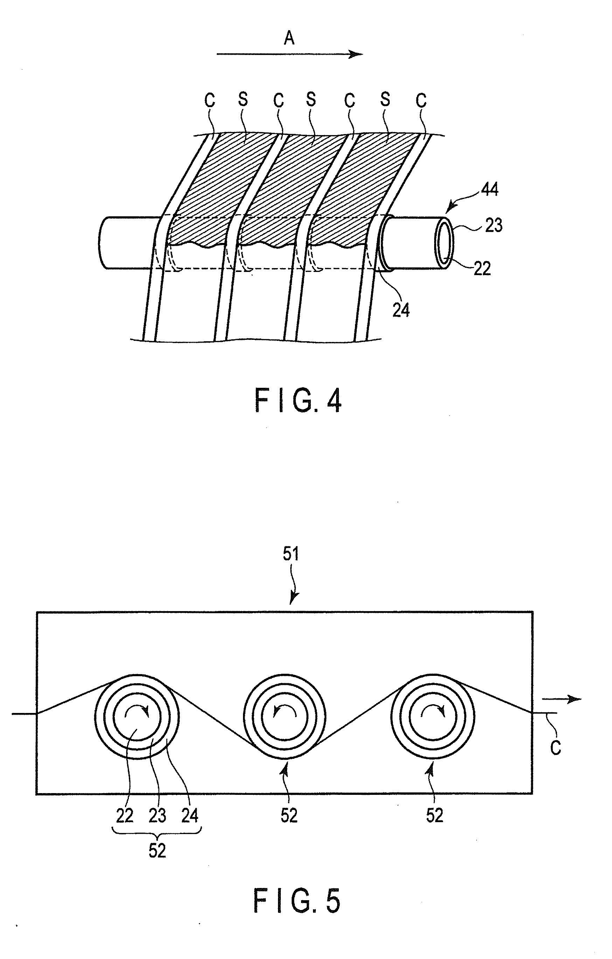

As shown in FIG. 1, a drying furnace 51 as a drying apparatus is arranged subsequent to the second die head 43. As shown in FIG. 5, a plurality of support rolls 52 is arranged inside the drying furnace 51. Each of the support rolls 52 includes the cored bar 22, the surface layer 23 formed on the cored bar 22, and the plurality of protruding portions 24 formed on the outer circumferential surface of the surface layer 23. Each of the protruding portions 24 has an annular shape and covers the outer circumferential surface of the surface layer 23. The interval W is provided between protruding portions 24. The interval W is changed in accordance with the width of a slurry coated portion on the current collector.

The slurry is prepared in a slurry state by, for example, dispersing an electrode material containing active material in an organic solvent or water. The active material is not particularly limited, but, for example, a positive active material or a negative active material of a non-aqueous electrolyte battery can be cited.

For example, a sheet in a foil form made of metal or alloy can be used as the current collector C. The current collector C has the first surface and second surface positioned on the opposite side of the first surface.

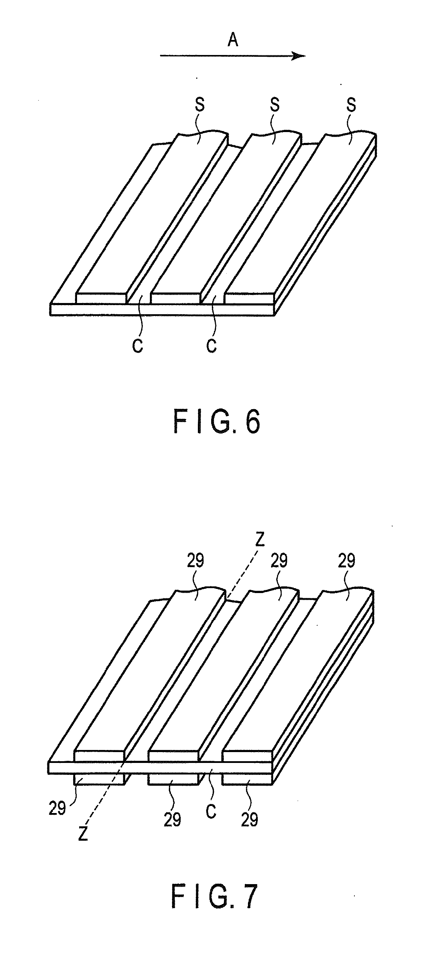

Next, the coating process will be described. The current collector C in a long shape is supplied from a current collector supply apparatus (not shown) onto the first support roll 42. The slurry supplied from the slurry supply apparatus to the liquid storage portion 46 passes through the die slit 47 before being supplied to the first surface of the current collector C through the slurry discharge ports 48. As shown in FIG. 6, the first surface of the current collector C is coated with the slurry in such a way that a slurry coated portion S and a slurry non-coated portion C are alternately arranged in a direction A perpendicular to a moving direction X of the current collector C.

The current collector C whose first surface is coated with slurry by the first die head 41 is carried to the second die head 43 by the carrying roller 45. The second surface of the current collector C is not coated with slurry at all. The second surface is opposite to the second die head 43. The slurry supplied from the slurry supply apparatus to the liquid storage portion 46 in the second die head 43 passes through the die slit 47 before being supplied to the second surface of the current collector C through the slurry discharge ports 48. Locations of the second surface of the current collector C corresponding to the slurry coated portions of the first surface are coated with slurry. Thus, both sides of the current collector C are coated with slurry in such a way that the slurry coated portion and the slurry non-coated portion are alternately arranged in a direction perpendicular to the moving direction X of the current collector C.

The first position $P_1$ and the second position $P_2$ are not in the same plane and the height of the first position $P_1$ is different from the height of the second position $P_2$. In addition, the third position $P_3$ and the fourth position $P_4$ are not in the same plane and the height of the third position $P_3$ is different from the height of the fourth position $P_4$. As a result, the first die head 41, the first support roll 42, the second die head 43, and the second support roll 44 are arranged staggeredly in an up and down direction and thus, the current collector C can be carried meanderingly in the up and down direction from the first support roll 42 to the second support roll 44. As a result, the occurrence of oblique wrinkles in the current collector C during moving can be suppressed and therefore, the first surface and second surface of the current collector C can uniformly be coated with slurry.

The current collector C having passed by the second die head 43 is carried to the second support roll 44. As shown in FIG. 4, the slurry non-coated portion C of the second surface of the current collector C is arranged on the protruding portion 24 of the second support roll 44. The slurry coated portion S of the second surface of the current collector C is arranged between the protruding portions 24 of the second support roll 44. The current collector C is in contact with the protruding portions 24 of the second support roll 44 in a state in which a tension is applied in the longitudinal direction (moving direction of the current collector C) X thereof. Thus, the slurry coated portion S of the second surface of the current collector C is in a floating state from the surface layer 23 and a space is present between the slurry coated portion S of the current collector C and the surface layer 23.

Thus, the current collector can be carried without bringing the roll into contact with the surface of the slurry coated portion before being dried and therefore, both sides of the current collector can be coated with slurry and then dried.

Next, the current collector C having the slurry coated portions S and the slurry non-coated portions C formed on both sides thereof is carried to a drying furnace 51. The current collector C is passed through the drying furnace 51 by being carried by the support roll 52. After entering the drying furnace 51, the surface of the current collector C is still wet for a considerable distance and cannot be supported by a roll or the like. Since the slurry non-coated portion of the first surface or second surface of the current collector C is in contact with the protruding portion 24 of the support roll 52, the carrying of the current collector C can be stabilized. Instead of using the support roll 52, the current collector C can be carried without directly coming into contact with the surface of the current collector C by making a wind from the lee side. In this case, a high wind needed to float the current collector C dries the surface of the slurry coated portion quickly, leading to cracks or the like on the surface of the slurry coated portion. Thus, it is particularly preferable to use the support roll 52.

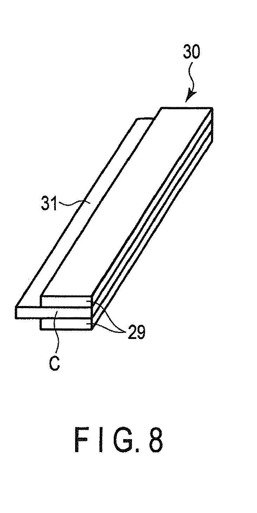

As shown in FIG. 7, the current collector C having a layer containing active material 29 formed on both sides thereof in a plurality of rows can be obtained by the above coating process and drying process. Subsequently, after carrying out press molding to compress the layer containing active material 29, an electrode 30 shown in FIG. 8 is obtained by cutting along a boundary Z between the current collector C and the layer containing active material 29. The obtained electrode 30 has the layer containing active material 29 formed excluding one long side of the current collector C. The long side on which the layer containing active material 29 is not formed functions as a collecting tab 31. Incidentally, the current collector C may be cut before press molding.

It is desirable that the distance $L_1$ between the first position $P_1$ and the second position $P_2$ satisfy a formula (1) or the distance $L_2$ between the third position $P_3$ and the fourth position $P_4$ satisfy a formula (2). It is particularly preferable to satisfy both of the formula (1) and the formula (2).

$$1 \text{ mm} \leq L_1 \leq 300 \text{ mm} \quad (1)$$

$$1 \text{ mm} \leq L_2 \leq 300 \text{ mm} \quad (2)$$

By setting the distance $L_1$ or the distance $L_2$ to 1 mm or more, the carrying path of the current collector can be prevented from being plane and thus, the occurrence of oblique wrinkles in the current collector during carrying can be suppressed. The effect of suppressing the occurrence of oblique wrinkles increases with the increasing distance $L_1$ or $L_2$, but if the distance is too large, the installation space of the apparatus in the height direction becomes too large, leading to lower production efficiency per unit space. Thus, it is preferable to set the distance $L_1$ or the distance L2 to 1 mm or more and 300 mm or less.

It is desirable that the second support roll 44 satisfy the following formula (3):

$$0.1 \leq (r-R) \leq 10 \quad (3)$$

As shown in FIG. 3, r is an outside radius (mm) of the protruding portion 24 and R is an inside radius (mm) of the protruding portion 24. R is equal to the radius up to the surface layer 23 of the second support roll 44.

By setting (r-R) to 0.1 mm or more, a sufficient gap can be secured between the outer circumferential surface of the surface layer 23 of the second support roll 44 and the slurry coated portion of the current collector C and thus, uniformity in the amount of coating can be improved. However, with increasing (r-R), the diameter of the second support roll body becomes relatively thinner and the strength thereof may be insufficient. By setting (r-R) to 10 mm or less, the strength of the second support roll body can be made sufficient. The particularly preferable range of (r-R) is $0.2 \leq (r-R) \leq 5$.

It is desirable that the second support roll 44 satisfy the following formula (4):

$$5 \leq h \leq 50 \quad (4)$$

As shown in FIG. 2, h is a width (mm) of the protruding portion 24 parallel to the rotation axis Y of the second support roll 44. H is a length (mm) thereof in a direction parallel to the rotation axis Y of the second support roll 44.

A sufficient area of the protruding portions 24 for supporting the current collector can be secured by setting h to 5 mm or more and thus, the current collector C near edges of the protruding portions 24 can be inhibited from being wrinkled or creased by a pressure at which the current collector C is pressed against the protruding portions 24. Thus, defects in production can be reduced by setting h to 5 mm or more. However, if h is too large, the width of the electrode that can be coated becomes narrow, which makes the effective width of the coating apparatus narrower, leading to lower production efficiency, and therefore, h is preferably 50 mm or less. The particularly preferable range of h is $10 \leq h \leq 40$.

It is desirable that the slurry non-coated portion C of the current collector C be in contact with the protruding portions 24 of the second support roll 44 in such a way that the following formula (5) is satisfied:

$$0.01 \leq \theta \leq 0.5 \qquad (5)$$

As shown in FIG. 1, $\theta$ is the angle of circumference (radian) corresponding to the length of an arc (around the rotation axis Y) in a portion where the slurry non-coated portion C of the current collector C is in contact with the protruding portion 24 of the second support roll 44 in an end face viewed from the rotation axis Y of the second support roll 44.

The pressure at which the current collector C is pressed against the protruding portions 24 can be made sufficient by setting $\theta$ to 0.01 radian or more so that the current collector C can be prevented from being floated from the protruding portions 24. As a result, a sufficient tension is applied to the current collector C and the slurry coated portion S of the current collector C can be maintained in a floating state from the surface layer 23 and so adhesion of the slurry coated portion S of the current collector C to the surface layer 23 can be avoided. Also by setting $\theta$ to 0.5 radians or less, the current collector C near edges of the protruding portions 24 can be inhibited from being wrinkled or creased by a pressure at which the current collector C is pressed against the protruding portions 24 and so defects in production can be reduced. The particularly preferable range of $\theta$ is $0.02 \leq \theta \leq 0.3$.

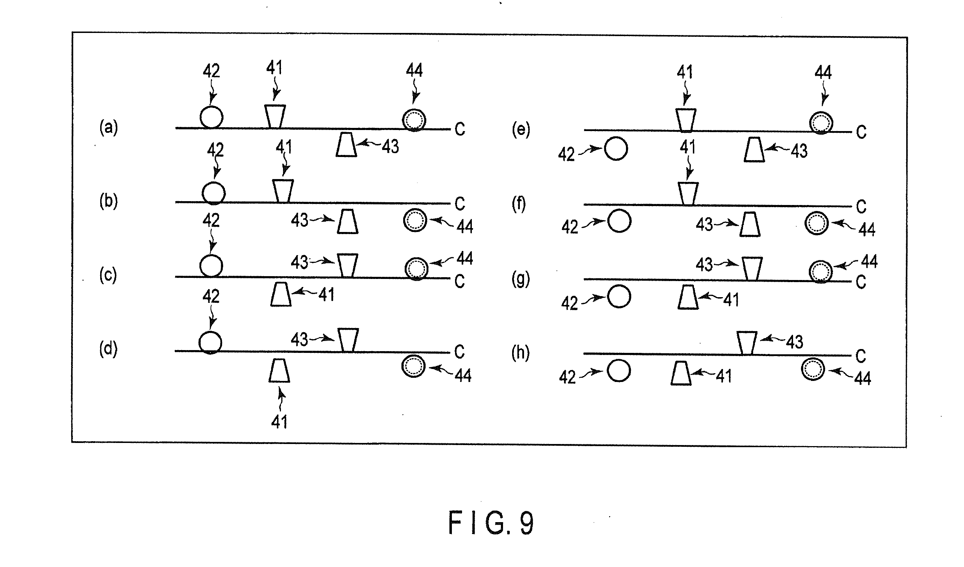

The arrangement of the first die head 41, the first support roll 42, the second die head 43, and the second support roll 44 is not limited to the arrangement shown in FIG. 1 and the arrangement may be changed as shown, for example, in FIG. 9.

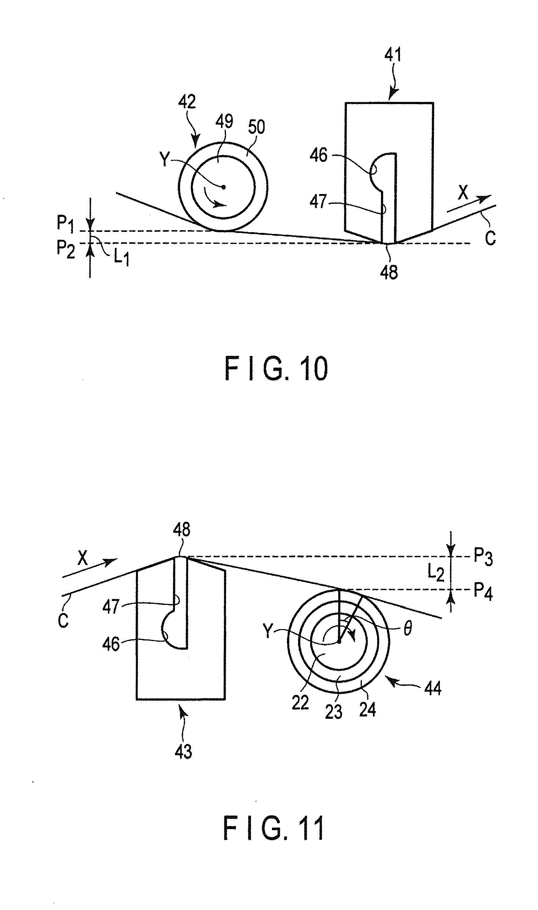

In the arrangement shown in (a) of FIG. 9, the first support roll 42, the first die head 41, and the second support roll 44 are arranged in a space above the current collector C. On the other hand, the second die head 43 is arranged in a space below the current collector C. If the first support roll 42 and the first die head 41 are arranged in the space above the current collector C, as shown, for example, in FIG. 10, the first position $P_1$ can be arranged so as not to be in the same plane as the second position $P_2$ by arranging the first position $P_1$ where the first support roll 42 and the first surface of the current collector C are in contact above the second position $P_2$ where slurry supplied from the slurry discharge ports 48 of the first die head 41 and the first surface of the current collector C are in contact. In this case, the distance $L_1$ between the first position $P_1$ and the second position $P_2$ has a value greater than 0.

In the arrangement shown in (b) of FIG. 9, the first support roll 42 and the first die head 41 are arranged in the space above the current collector C. On the other hand, the second die head 43 and the second support roll 44 are arranged in the space below the current collector C. In this case, as shown, for example, in FIG. 11, the third position $P_3$ can be arranged so as not to be in the same plane as the fourth position $P_4$ by arranging the third position $P_3$ where slurry supplied from the slurry discharge ports 48 of the second die head 43 and the second surface of the current collector C are in contact above the fourth position $P_4$ where the second support roll 44 and the second surface of the current collector C are in contact. In this case, the distance $L_2$ between the third position $P_3$ and the fourth position $P_4$ has a value greater than 0.

In the arrangement shown in (c) of FIG. 9, the first support roll 42, the second die head 43, and the second support roll 44 are arranged in the space above the current collector C. On the other hand, the first die head 41 is arranged in the space below the current collector C.

In the arrangement shown in (d) of FIG. 9, the first support roll 42 and the second die head 43 are arranged in the space above the current collector C. On the other hand, the first die head 41 and the second support roll 44 are arranged in the space below the current collector C.

The arrangement shown in (e) of FIG. 9 is the same as the arrangement shown in FIG. 1.

In the arrangement shown in (f) of FIG. 9, the first die head 41 is arranged in the space above the current collector C. On the other hand, the first support roll 42, the second die head 43, and the second support roll 44 are arranged in the space below the current collector C.

In the arrangement shown in (g) of FIG. 9, the second die head 43 and the second support roll 44 are arranged in the space above the current collector C. On the other hand, the first support roll 42 and the first die head 41 are arranged in the space below the current collector C.

In the arrangement shown in (h) of FIG. 9, the second die head 43 is arranged in the space above the current collector C. On the other hand, the first support roll 42, the first die head 41, and the second support roll 44 are arranged in the space below the current collector C.

Among arrangements shown in (a) to (h) of FIG. 9, the arrangement in (d) or (e) of FIG. 9 is particularly preferable. The reason, therefore, is that the first support roll 42, the first die head 41, the second die head 43, and the second support roll 44 are arranged in this order and in a staggered arrangement with the current collector C provided therebetween and therefore, it is easy to design a carrying path in such a way that the current collector meanders when viewed from the transverse section of the current collector. As a result, oblique wrinkles are less likely to arise when a compressive stress is applied to the current collector from a direction perpendicular to the moving direction thereof, resulting in a more uniform amount of coating.

According to the first embodiment described above, a first surface and a second surface of a current collector are coated with slurry containing active material by causing the current collector to pass by a first support roll, a first die head, a second die head, and a second support roll in this order. The first surface and the second surface of the current collector each have a slurry coated portion and a slurry non-coated portion formed alternately thereon. The distance $L_1$ between a first position where the first surface of the current collector and the first support roll are in contact and a second position where the first surface of the current collector and slurry supplied from the first die head are in contact is larger than 0 and the distance $L_2$ between a third position where the second surface of the current collector and slurry supplied from the second die head are in contact and a fourth position where a slurry non-coated portion of the current collector and the second support roll are in contact is larger than 0. As a result, the current collector can be carried meanderingly from the first support roll to the second support roll in a direction parallel to the end face thereof. Accordingly, the occurrence of oblique wrinkles in the current collector during carrying can be suppressed and therefore, uniformity of the amount of slurry with which the first surface and second surface of the current collector are coated can be increased.

In addition, after both sides of the current collector are coated with slurry, slurry non-coated portions of the current collector are arranged on a plurality of annular protruding portions formed on the outer circumferential surface of the second support roll and in this state, the current collector is carried to a drying apparatus by the second support roll and thus, the current collector can be carried without slurry coated portions of the current collector being brought into contact with the second support roll. Therefore, after both the first surface and second surface are coated with slurry, slurry coated portions of the first surface and the second can be dried. Consequently, a manufacturing method of an electrode by which uniformity of slurry with which the current collector is coated can be improved and which is superior in work efficiency can be provided.

(Second embodiment)

According to a second embodiment, a manufacturing method of a battery including a positive electrode, a negative electrode, and a non-aqueous electrolyte is provided. At least one electrode of the positive electrode and the negative electrode is manufactured by a method according to the first embodiment. Slurry and a current collector used for the manufacture of the positive electrode and the negative electrode will be described.

Positive electrode slurry is prepared by suspending an electrode material containing a positive electrode material, a conductive agent, and a binder in an appropriate solvent. For example, N-methyl ethyl pyrolidone can be cited as the solvent. The weight ratio of the total amount of the positive electrode material, the conductive agent, and the binder to the solvent is desirably 50:50 to 80:20.

As the positive electrode material, general lithium transition-metal composite oxide can be used. For example, such oxide includes $LiCoO_2$, $Li_{1+a}$ (Mn. Ni, Co)$_{1-a}O_a$($0<a<0.2$), $Li_{1+b}Ni_{1-c}M_cO_2$($0<b<0.2$, $0<c<0.4$, M is one or more selected from the group consisting of Co, A1 and Fe), $Li_{1+d}Mn_{2-d-e}M'_eO_4$ (M' is one or more selected from the group consisting of Mg, Al, Fe, Co and Ni), and $LiMPO_4$ (M is Fe, Co, or Ni).

The conductive agent can improve collecting performance and reduce contact resistance with a current collector. As the conductive agent, for example, carbon material such as acetylene black, carbon black, and graphite can be cited.

The binder can bind a positive electrode material and a conductive agent. As the binder, for example, polytetrafluoroethylene (PTFE), polyvinylidene fluoride (PVdF), and fluorine-contained rubber can be cited.

Regarding the compounding ratio of the positive electrode material, conductive agent, and the binder, it is preferable that the positive electrode material be 80% by weight or more and 95% by weight or less, the positive electrode conductive agent be 3% by weight or more and 18% by weight or less, and the binder be 2% by weight or more and 17% by weight or less. Regarding the positive electrode conductive agent, the above effect can be achieved by being 3% by weight or more and dissolution of the non-aqueous electrolyte on the surface of the positive electrode conductive agent in a state of high-temperature preservation can be reduced by being 18% by weight or less. Regarding the binder, sufficient electrode strength can be obtained by being 2% by weight or more and a content of an insulator in the electrode can be reduced to reduce internal resistance by being 17% by weight or less.

The positive electrode current collector is preferably aluminum foil or aluminum alloy foil containing elements such as Mg, Ti, Zn, Mn, Fe, Cu, or Si.

Negative electrode slurry is prepared by suspending, for example, a negative electrode material, a conductive agent, and a binder in an appropriate solvent. For example, N-methyl ethyl pyrolidone can be cited as the solvent. The weight ratio of the total amount of the negative electrode material, the conductive agent, and the binder to the solvent is desirably 50:50 to 80:20.

As the negative electrode active material, for example, titanium containing metal composite oxide can be used and titanium base oxide that does not contain lithium when the titanium base oxide is synthesized can be cited.

As the lithium titanium oxide, for example, $Li_{4+x}Ti_5O_{12}$ ($0 \leq x \leq 3$) having the spinel structure and $Li_{2+y}Ti_3O_7$ ($0 \leq y \leq 3$) having the ramsdellite structure can be cited.

As the titanium base oxide, $TiO_2$ and metal composite oxide containing Ti and at least one element selected from a group consisting of P, V, Sn, Cu, Ni, Co, and Fe. $TiO_2$ is preferably the anatase type of low crystal whose heat treatment is 300 to 500°C. As the metal composite oxide containing Ti and at least one element selected from a group consisting of P, V, Sn, Cu, Ni, Co, and Fe, for example, $TiO_2$-$P_2O_5$, $TiO_2$-$V_2O_5$, $TiO_2$-$P_2O_5$-$SnO_2$, and $TiO_2$-$P_2O_5$-MeO (Me is at least one element selected from a group consisting of Cu, Ni, Co, and Fe) can be cited. The metal composite oxide preferably has a micro structure in which the crystal phase and the amorphous phase coexist or the amorphous phase alone exists. Thanks to such a micro structure, the cycle performance can significantly be improved. Among others, lithium titanium oxide and metal composite oxide containing Ti and at least one element selected from a group consisting of P, V, Sn, Cu, Ni, Co, and Fe are preferable.

As the conductive agent, for example, acetylene black, carbon black, and graphite can be cited.

The binder can bind a negative electrode material and a conductive agent. As the binder, for example, polytetrafluoroethylene (PTFE), polyvinylidene fluoride (PVdF), fluorine-contained rubber, and styrenebutadiene rubber can be cited.

Regarding the compounding ratio of the negative electrode material, negative electrode conductive agent, and the binder, it is preferable that the negative electrode material be 70% by weight or more and 96% by weight or less, the negative electrode conductive agent be 2% by weight or more and 28% by weight or less, and the binder be 2% by weight or more and 28% by weight or less. If the negative electrode conductive agent is 2% by weight or less, collecting performance of the negative electrode layer is degraded and large-current characteristics of a non-aqueous electrolyte secondary battery are degraded. If the binder is 2% by weight or less, binding properties of the negative electrode layer and negative electrode current collector are degraded and cycle characteristics are degraded. On the other hand, the negative electrode conductive agent and the binder are each preferably 28% by weight or less in terms of higher capacity.

As the negative electrode current collector, for example, aluminum foil, aluminum alloy foil, and copper foil can be cited. The preferable negative electrode current collector includes aluminum foil and aluminum alloy foil containing such elements as Mg, Ti, Zn, Mn, Fe, Cu, Si or the like that are electrochemically stable in a potential range higher than 1.0 V.

FIGS. 8 and 9 exemplify a non-aqueous electrolyte battery manufactured by the method according to the second embodiment. The battery shown in FIG. 8 is a sealed prismatic-shaped non-aqueous electrolyte battery. The non-aqueous electrolyte battery includes an outer can 1, a cap 2, a positive electrode output terminal 3, a negative electrode output terminal 4, and an electrode group 5. As shown in FIG. 8, the outer can 1 has a closed-end rectangular cylindrical shape and is formed from, for example, metal such as aluminum, aluminum alloy, iron, and stainless.

As shown in FIG. 9, the flat electrode group 5 contains a positive electrode 6 and a negative electrode 7 wound in a flat shape with a separator 8 therebetween. The positive electrode 6 contains a positive electrode current collector formed from, for example, metal foil in a strip shape, a positive electrode collecting tab 6a formed from a portion of the positive electrode current collector which has no positive electrode active material layer, and a positive electrode active material layer 6b formed in the positive electrode current collector excluding at least the positive electrode collecting tab 6a. On the other hand, the negative electrode 7 contains a negative electrode current collector formed from, for example, metal foil in a strip shape, a negative electrode collecting tab 7a formed from a portion of the negative electrode current collector which has no negative electrode active material layer, and a negative electrode active material layer 7b formed in the negative electrode current collector excluding at least the negative electrode collecting tab 7a.

The positive electrode 6, the separator 8, and the negative electrode 7 are wound with the positive electrode 6 and the negative electrode 7 being shifted so that the positive electrode collecting tab 6a is projected from the separator 8 in a winding axis direction of the electrode group and the negative electrode collecting tab 7a is projected from the separator 8 in the opposite direction thereof. By the winding described above, as shown in FIG. 9, the electrode group 5 has the positive electrode collecting tab 6a wound in a spiral form projected from one end face and the negative electrode collecting tab 7a wound in a spiral form projected from the other end face.

The electrode group 5 is impregnated with an electrolyte (not shown). The cap 2 in a rectangular plate shape is seamlessly welded to an open end of the outer can 1, for example, by laser. The cap 2 is formed from, for example, metal such as aluminum, aluminum alloy, iron, and stainless. The cap 2 and the outer can 1 are preferably formed from the same kind of metal.

As shown in FIG. 8, a gas relief vent 9 is provided near the center of an outer surface of the cap 2. The gas relief vent 9 includes a recess 9a in a rectangular shape provided on the outer surface of the cap 2 and a groove 9b in an X shape provided inside the recess 9a. The groove 9b is formed by, for example, press-molding the cap 2 in the thickness direction. A pouring hole 10 is open to the cap 2 and sealed after an electrolyte being poured in.

Positive electrode/negative electrode output terminals 3, 4 are fixed to both sides sandwiching the gas relief vent 9 therebetween on the outer surface of the cap 2 via an insulating gasket (not shown). For a lithium ion secondary battery using a carbon based material as the negative electrode active material, for example, aluminum or aluminum alloy is used as the positive electrode output terminal 3 and, for example, metal such as copper, nickel, and nickel-plated iron is used as the negative electrode output terminal 4. If lithium titanate is used as the negative electrode active material, instead of the above, aluminum or aluminum alloy may be used as the negative electrode output terminal 4.

One end of a positive electrode lead 11 is electrically connected to the positive electrode output terminal 3 by caulking or welding and the other end thereof is electrically connected to the positive electrode collecting tab 6a. One end of a negative electrode lead 12 is electrically connected to the negative electrode output terminal 4 by caulking or welding and the other end thereof is electrically connected to the negative electrode collecting tab 7a. The method of electrically connecting the positive and negative electrode leads 11, 12 to the positive and negative collecting tabs 6a, 7a respectively is not specifically limited and, for example, welding such as ultrasonic welding and laser welding can be cited.

Thus, currents can be picked up from the positive and negative electrode output terminals 3, 4 by the positive electrode output terminal 3 and the positive collecting tab 6a being electrically connected via the positive electrode lead 11 and the negative electrode output terminal 4 and the negative collecting tab 7a being electrically connected via the negative electrode lead 12.

The material of the positive and negative electrode leads 11, 12 is not specifically specified, but it is desirable to use the same material as the material of the positive and negative electrode output terminals 3, 4. For example, if the material of the output terminal is aluminum or aluminum alloy, it is preferable to use aluminum or aluminum alloy as the material of the lead. If the output terminal is formed from copper, it is desirable to use copper or the like as the material of the lead.

The separator and non-aqueous electrolyte will be described.

(Separator)

As the separator, for example, a porous film including polyethylene, polypropylene, cellulose, and polyvinylidene fluoride (PVdF) and nonwoven fabric made of synthetic resin can be cited. Among others, a porous film made of polyethylene or polypropylene melts at a fixed temperature to be able to block a current and is preferable in terms of safety improvement. Also among others, a porous film made of cellulose can contain more electrolytes than separators of other materials with the same thickness and the same percentage of void and thus, the conductivity of Li ions in the electrolyte can relatively be increased, which makes the porous film made of cellulose most desirable for a non-aqueous electrolyte battery which has a high-output at a large current.

(Non-aqueous electrolyte)

As the non-aqueous electrolyte, a liquid non-aqueous electrolyte prepared by dissolving an electrolyte in an organic solvent and a gel non-aqueous electrolyte prepared by compounding a liquid electrolyte and polymeric material can be cited.

The liquid non-aqueous electrolyte is prepared by dissolving an electrolyte in an organic solvent in a concentration ranging from 0.5 mol/l to 2.5 mol/l.

As the electrolyte, for example, lithium salt such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluorometasulfonate ($LiCF_3SO_3$), or lithium bistrifluoromethylsulfonylimide [$LiN(CF_3SO_2)_2$] or a mixture thereof. An electrolyte that is difficult to oxidize even at a high potential and thus, $LiPF_6$ is most desirable.

As the organic solvent, for example, cyclic carbonate such as propylene carbonate (PC), ethylene carbonate (EC), and vinylene carbonate, chain carbonate such as diethyl carbonate (DEC), dimethyl carbonate (DMD), and methyl ethyl carbonate (MEC), cyclic ether such as tetrahydrofuran (THF), 2-methyl tetrahydrofuran (2MeTHF), and dioxolane (DOX), chain ether such as dimethoxyethane (DME) and diethoxyethane (DEE), γ-butyrolactone (GBL), acetonitrile (AN), sulfolane (SL) or the like can be cited. These organic solvents may be used alone or in combination of two or more thereof.

As the polymeric material, for example, polyvinylidene fluoride (PVdF), polyacrilonitrile (PAN), and polyethyleneoxide (PEO) can be cited.

As the non-aqueous electrolyte, room temperature molten salt (ionic melt) containing lithium ions, polymeric solid electrolyte, or inorganic solid electrolyte may be used.

The room temperature molten salt (ionic melt) refers to, among organic salts containing organic cations and anions, compounds that can be present as a liquid at room temperature (15°C to 25°C). As the room temperature molten salt, room temperature molten salt present as a liquid alone, room temperature molten salt liquefied by being combined with an electrolyte, and room temperature molten salt liquefied by being dissolved in an organic solvent can be cited. Generally, the melting point of room temperature molten salt used in a non-aqueous electrolyte battery is 25°C or below. The organic cation generally has a quaternary ammonium skeleton.

The polymeric solid electrolyte is prepared by dissolving an electrolyte in a polymeric material and solidifying the dissolved electrolyte.

The inorganic solid electrolyte is a solid material having conductivity of lithium ions.

In FIGS. 8 and 9, an example using an outer can as a case member of the battery is described, but the member that can be used as a case member is not limited to the outer can and, for example, a laminated film container may be used. The laminated film is a multilayer film formed from a metal layer and a resin layer coating the metal layer. The metal layer is preferably aluminum foil or aluminum alloy foil for the purpose of weight reduction. The resin layer is intended to reinforce the metal layer and polymers such as polypropylene (PP), polyethylene (PE), nylon, and polyethylene terephthalate (PET) can be used. The laminated film is formed by heat sealing.

The shape of the battery is not limited to the prismatic-shaped battery shown in FIGS. 8 and 9 and may have, for example, a flat shape, cylindrical shape, coin shape, button shape, sheet shape, or laminated shape. In addition to small batteries mounted on mobile electronic devices, batteries according to the embodiment can be applied to large batteries mounted on two-wheeled and four-wheeled vehicles.

According to the second embodiment described above, a positive electrode or a negative electrode is manufactured by the method according to the first embodiment and thus, a positive electrode or a negative electrode in which uniformity in the amount of coated slurry is improved can be manufactured. As a result, a non-aqueous electrolyte battery with less capacity degradation after repeated charging/discharging at a large current can be obtained.

Examples

Examples will be described below, but embodiments are not limited to examples shown below without deviating from the spirit and scope thereof.

(Example 1)

Positive electrode slurry is prepared by dispersing a positive electrode active material $LiCoO_2$, acetylene black and graphite as the positive electrode conductive agents, and polyvinylidene fluoride (PVdF) as a binder in N-methyl ethyl pyrolidone. Aluminum foil of 20 $\mu$m in thickness and 600 mm in width is used as a positive electrode current collector serving also as a base substrate for slurry coating.

A first support roll has a cylindrical shape of 35 mm in radius.

A support roll including a cored bar, a metal surface layer covering the cored bar, and annular protruding portions formed on the outer circumferential surface of the surface layer is used as a second support roll. The inside radius (radius up to the surface layer) R of the annular protruding portion is 35 mm, the outside radius r of the annular protruding portion is 36 mm, and the value of (r-R) is 1 mm. The total length H of the second support roll is 800 mm. Four protruding portions are provided. The width h of each protruding portion is 20 mm. The intervals between the protruding portions are all equal and 150 mm.

The first and second support rolls and the first and second die heads are arranged as shown in FIG. 1 and the distance $L_1$ and the distance $L_2$ are each set to 10 mm.

The first surface of the current collector is coated with slurry in the width of 145 mm by using the first die head. Next, a portion of the second surface of the current collector that overlaps with the slurry coated portion of the first surface is coated with slurry in the width of 145 mm by using the second die head. Both sides of the current collector are coated with slurry in such a way that the slurry coated portion and the slurry non-coated portion are alternately arranged in a direction perpendicular to the moving direction of the current collector.

The current collector coated with slurry on both sides is carried to the drying furnace while being brought into contact with the second support roll at a revel angle $\theta$ of 0.2 radians. At this point, slurry non-coated portions on the second surface of the current collector are brought into contact with the protruding portions 24 of the second support roll.

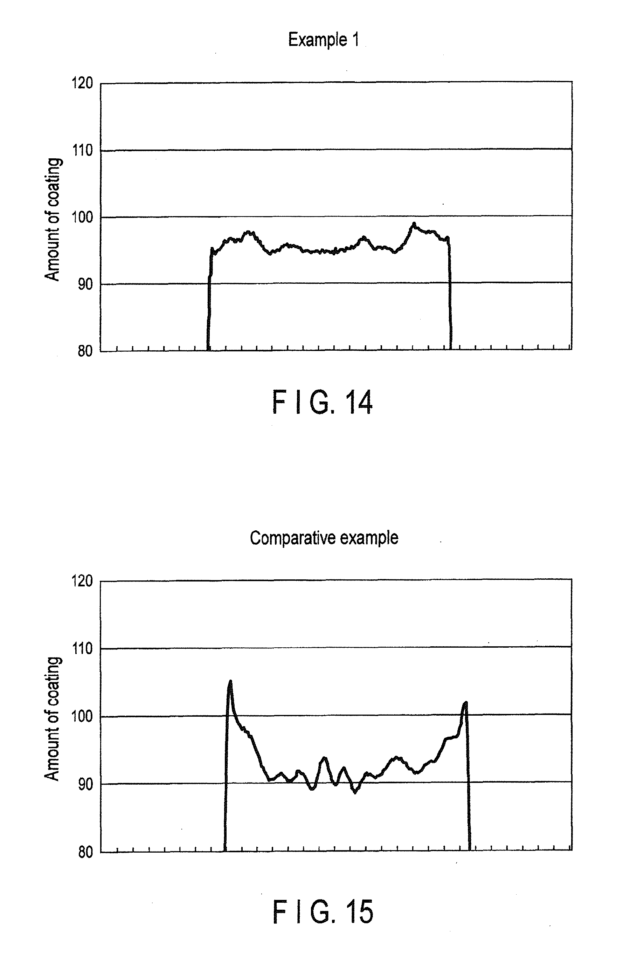

Slurry coated portions on the first surface and second surface of the current collector are dried using the drying furnace shown in FIG. 5. Next, an examination of the distribution of the amount of coating on the first surface and second surface shows the distribution shown in FIG. 14.

A positive electrode is obtained by performing the drying process and then, press molding, and cutting process. A non-aqueous electrolyte battery is produced by hermetically sealing the obtained positive electrode, a negative electrode, a non-aqueous electrolyte, and a separator in an aluminum containing laminated film container. Then, charging/discharging is repeated 1000 cycles with a current of 5 C. If an initial discharge capacity is set to 100, the 1000 cycles discharge capacity is 80.

(Examples 2 to 9)

Positive electrodes and non-aqueous electrolyte batteries are manufactured in the same manner as in Example and charging/discharging is performed under the same conditions as in Example except that values of (r-R), h, $L_1$, $L_2$, and θ are changed as shown in Table 1 below. The 1000 cycles discharge capacity when an initial discharge capacity is set to 100 is shown in Table 1 below.

(Comparative Example)

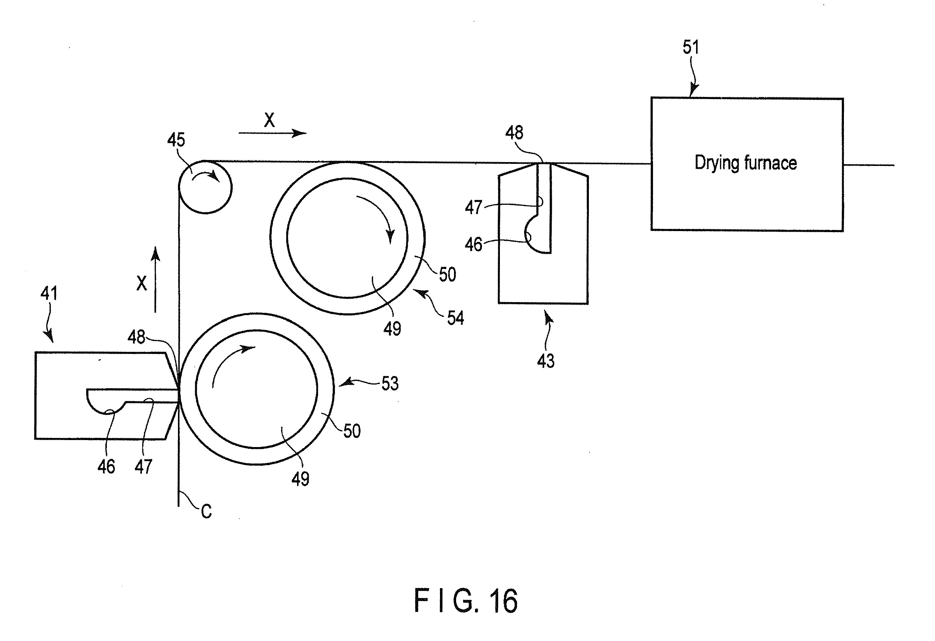

Coating of slurry is carried out in the same way as in Example 1 except that the coating apparatus and drying apparatus shown in FIG. 16 are used. As shown in FIG. 16, a die coater comprising a first die head 41 and a backup roll 53, a carrying roller 45, a support roll 54, and a second die head 43 are arranged in this order. The backup roll 53 and the support roll 54 each have a cored bar 49 and a surface layer 50 covering the cored bar 49. No protruding portion is provided on the outer circumference of the surface layer 50. The radius of the backup roll 53 and the support roll 54 is 200 mm. After the first surface of the current collector C is coated with slurry by the die coater, the current collector C passes by the carrying roller 45 and then by the support roll 54. After that, the second surface thereof is coated with slurry by the second die head 43.

Slurry coated portions on the first surface and second surface of the current collector are dried using the drying furnace shown in FIG. 5. Next, an examination of the distribution of the amount of coating on the first surface and second surface shows the distribution shown in FIG. 15. Comparison of FIG. 15 with the result of FIG. 14 showing the distribution of the amount of coating in Example 1 shows that the distribution of the amount of coating in Comparative Example is far more non-uniform than in Example 1.

A positive electrode is obtained by performing the drying process and then, press molding, and cutting process. A non-aqueous electrolyte battery is produced in the same manner as in Example 1 using the obtained positive electrode. After repeating charging/discharging under the same conditions as in Examples, the 1000 cycles discharge capacity is 65 when an initial discharge capacity is set to 100. When compared with Examples, the 1000 cycles discharge capacity is smaller, which shows that degradation has advanced.

**[Table 1]**

| | $L_1$ (mm) | $L_2$ (mm) | r (mm) | R (mm) | (r-R) (mm) | h (mm) | H (mm) | Θ (radian) | Discharge capacity of 1000 cycles |
|---|---|---|---|---|---|---|---|---|---|
| Example 1 | 10 | 10 | 36 | 35 | 1 | 20 | 800 | 0.2 | 80 |
| Example 2 | 10 | 10 | 36.1 | 35 | 0.1 | 20 | 800 | 0.2 | 80 |
| Example 3 | 10 | 10 | 45 | 35 | 10 | 20 | 800 | 0.2 | 79 |
| Example 4 | 10 | 10 | 36 | 35 | 1 | 5 | 800 | 0.2 | 70 |
| Example 5 | 10 | 10 | 36 | 35 | 1 | 50 | 800 | 0.2 | 82 |
| Example 6 | 10 | 10 | 36 | 35 | 1 | 20 | 800 | 0.01 | 70 |
| Example 7 | 10 | 10 | 36 | 35 | 1 | 20 | 800 | 0.5 | 78 |
| Example 8 | 1 | 1 | 36 | 35 | 1 | 20 | 800 | 0.2 | 78 |
| Example 9 | 300 | 300 | 36 | 35 | 1 | 20 | 800 | 0.2 | 82 |
| Comparative Example | - | - | - | - | - | - | 800 | - | 65 |

As is evident from Table 1, capacity degradation after repeating charging/discharging with a large current can be reduced by the methods of Examples 1 to 9. In contrast, according to Comparative Example in which the carrying path of a current collector is made plane, capacity degradation after repeating charging/discharging with a large current is larger than in Examples 1 to 9.

According to a manufacturing method of electrode in at least one embodiment described above, a first surface and a second surface of a current collector are coated with slurry containing active material by causing the current collector to pass by a first support roll, a first die head, a second die head, and a second support roll in this order. In such a method, the distance $L_1$ between a first position where the first surface of the current collector and the first support roll are in contact and a second position where the first surface of the current collector and slurry supplied from the first die head are in contact is larger than 0 and the distance $L_2$ between a third position where the second surface of the current collector and slurry supplied from the second die head are in contact and a fourth position where a slurry non-coated portion of the current collector and the second support roll are in contact is larger than 0 and therefore, the current collector can be carried from the first support roll to the second support roll meanderingly in a direction parallel to the end face of the current collector. Accordingly, the occurrence of oblique wrinkles in the current collector during movement can be suppressed and therefore, uniformity of the amount of coated slurry on the first surface and second surface of the current collector can be improved. Moreover, the second support roll has a plurality of annular protruding portions formed on the outer circumferential surface thereof and therefore, slurry coated portions can be dried simultaneously on both sides of the current collector. Work efficiency can thereby be improved. Therefore, a manufacturing method of an electrode which is superior in work efficiency and by which uniformity of slurry with which the current collector is coated can be improved can be provided.

Some embodiments of the present invention have been described, but these embodiments are presented as examples and are not intended to limit the scope of the present invention. These new embodiments can be carried out in various other forms and various omissions, substitutions, or alterations can be made without deviating from the spirit of the invention. These embodiments and modifications thereof are included in the scope and spirit of the invention and also included in the scope of the invention described in claims and equivalents thereof.

Reference Signs List

1: Outer can; 2: Cap; 3: Positive electrode output terminal; 4: Negative electrode output terminal; 5: Electrode group; 6: Positive electrode; 6a: Positive electrode collecting tab; 6b: Layer containing positive electrode active material; 7: Negative electrode; 7a: Negative electrode collecting tab; 7b: Layer containing negative electrode active material; 8: Separator; 9: Gas relief vent; 9a: Recess; 9b: Groove; 10: Pouring port; 11: Positive electrode lead; 12: Negative electrode lead; 22, 49: Cored bar; 23, 50: Surface layer; 24: Protruding portion; C: Current collector; S: Slurry coated portion; 29: Layer containing active material; 30: Electrode; 31: Collecting tab; 40: Coating apparatus; 41: First die head; 42: First backup roll; 43: Second die head; 44: Second backup roll; 45: Carrying roller; 46: Liquid storage portion; 47: Die slit; 48: Slurry discharge port; 51: Drying furnace; 52: Support roll

**Claims**

1.  A manufacturing method of an electrode comprising:

    carrying a current collector to a first die head by a first support roll;
    coating a first surface of the current collector with slurry containing active material using the first die head to arrange a slurry coated portion and a slurry non-coated portion alternately in a direction perpendicular to a moving direction of the current collector;
    coating a second surface of the current collector with the slurry using a second die head to arrange the slurry coated portion and the slurry non-coated portion alternately in the direction perpendicular to the moving direction of the current collector;
    arranging the slurry non-coated portion of the first surface or the second surface of the current collector on a plurality of annular protruding portions formed on an outer circumferential surface of a second support roll;
    carrying the current collector to a drying apparatus by the second support roll; and
    drying the slurry coated portion of the first surface and the second surface of the current collector by the drying apparatus, wherein a formula (1) and a formula (2) shown below are satisfied:

    $$0 < L_1 \quad (1)$$

    $$0 < L_2 \quad (2)$$

    where $L_1$ is a distance between a first position where the first surface of the current collector and the first support roll are in contact and a second position where the first surface of the current collector and the slurry supplied from the first die head are in contact and $L_2$ is a distance between a third position where the second surface of the current collector and the slurry supplied from the second die head are in contact and a fourth position where the slurry non-coated portion of the first surface or the second surface of the current collector and the second support roll are in contact.

2.  The manufacturing method of an electrode according to claim 1,

wherein the distance $L_1$ satisfies 1 mm $\leq L_1 \leq$ 300 mm and the distance $L_2$ satisfies 1 mm $\leq L_2 \leq$ 300 mm.

3. The manufacturing method of an electrode according to claim 2,
   wherein the second support roll satisfies the following formula (3):

$$0.1 \leq (r-R) \leq 10 \qquad (3)$$

where r is an outside radius (mm) of the annular protruding portion and R is an inside radius (mm) of the annular protruding portion.

4. The manufacturing method of an electrode according to claim 2,
   wherein the second support roll satisfies the following formula (4):

$$5 \leq h \leq 50 \qquad (4)$$

where h is a width (mm) of the annular protruding portion.

5. The manufacturing method of an electrode according to claim 2,
   wherein the slurry non-coated portion on the first surface or the second surface of the current collector is in contact with the annular protruding portion of the second support roll, and satisfies the following formula (5) :

$$0.01 \leq \theta \leq 0.5 \quad (5)$$

where $\theta$ is an angle of circumference (radian) corresponding to a length of an arc in a portion where the slurry non-coated portion is in contact with the annular protruding portion of the second support roll.

6. The manufacturing method of an electrode according to any one of claims 3 to 5,
   wherein the drying apparatus comprises a third support roll comprising a plurality of annular protruding portions formed on the outer circumferential surface thereof and drying is carried out by carrying the current collector through the drying apparatus by the third support roll while the slurry non-coated portion of the first surface or the second surface being brought into contact with the annular protruding portion of the third support roll.

7. A manufacturing method of a non-aqueous electrolyte battery comprising a positive electrode, a negative electrode, and a non-aqueous electrolyte,
   wherein at least one of the positive electrode and the negative electrode is manufactured by the method according to any one of claims 1 to 6.

F I G. 1

F I G. 2

F I G. 3

A →

C S C S C S C

44
23
22
24

# FIG. 4

51

22 23 24
52
52 52

# FIG. 5

F I G. 6

F I G. 7

F I G. 8

FIG.9

FIG. 10

FIG. 11

F I G. 12

F I G. 13

Example 1

FIG. 14

Comparative example

FIG. 15

F I G. 16

**INTERNATIONAL SEARCH REPORT**

| International application No. |
| --- |
| PCT/JP2011/080317 |

A.  CLASSIFICATION OF SUBJECT MATTER
*H01M4/139*(2010.01)i

According to International Patent Classification (IPC) or to both national classification and IPC

B.  FIELDS SEARCHED

Minimum documentation searched (classification system followed by classification symbols)
H01M4/139, B05C5/00-5/04

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2010-225467 A  (Toyota Motor Corp.), 07 October 2010 (07.10.2010), claim 1; fig. 3 (Family: none) | 1-7 |
| Y | JP 2006-175415 A  (Sony Corp.), 06 July 2006 (06.07.2006), fig. 6 (Family: none) | 1-7 |
| A | JP 2008-066050 A  (Matsushita Electric Industrial Co., Ltd.), 21 March 2008 (21.03.2008), claim 1 (Family: none) | 1-7 |

| ☒  Further documents are listed in the continuation of Box C. | ☐  See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| 16 March, 2012 (16.03.12) | 27 March, 2012 (27.03.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2011/080317

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-061959 A (Furukawa Aluminum Co., Ltd.), 27 February 1992 (27.02.1992), fig. 1 (Family: none) | 1-7 |

Form PCT/ISA/210 (continuation of second sheet) (July 2009)

**EP 2 800 173 A1**

**REFERENCES CITED IN THE DESCRIPTION**

**Patent documents cited in the description**

- JP 2002313327 A
- JP 4061959 A
- JP 2007029789 A
- JP 2002361152 A